# EUROPEAN PATENT APPLICATION

(11) **EP 2 784 361 A1**
(43) Date of publication of application: **01.10.2014**
(21) Application number: 14161699.5
(22) Date of filing: 26.03.2014
(51) Int. Cl.: F16K 31/04

(54) **Electrically operable rotary actuator assembly**

(30) Priority: 29.03.2013 GB 201305831
(71) Applicant: R J Pond Ltd, Stroud, Gloucestershire GL5 4AU (GB)
(72) Inventor: Pond, Richard, Stroud, Gloucestershire GL5 4AU (GB)
(74) Representative: Davies, Elliott

(57) **Abstract**

An electrically operable rotary actuator assembly is disclosed for opening and closing a rotary gate valve. The assembly comprises an operating shaft for operating the valve, an electrically operable actuator for imparting a rotational drive to the shaft to cause the shaft to rotate from a first rotational orientation to a second rotational orientation and biasing means for imparting a rotational bias to the shaft to cause the shaft to rotate from the second rotational orientation to the first rotational orientation. The assembly further comprises a clamp arrangement for clamping the shaft in the second rotational orientation.

## Description

The present invention relates to an electrically operable rotary actuator assembly and particularly, but not exclusively, to an electrically operable rotary actuator assembly for operating subsea rotary valves.

A rotary gate valve is a valve which is opened and closed by rotating a valve stem, which is arranged to move one or more gates through an arc to open and close fluid flow pathways of the valve.

Actuators are known for manipulating the valve stems of such rotary gate valves and these actuators typically comprise an override arrangement, which facilitates controlled operation of the valve in the event that the normal operation of the actuator fails. GB2397363 discloses the use of a hydraulic actuator and particularly a manual override system whereby the valve may be controlled in situations whereby the hydraulic operation fails. The override facility is an important requirement, particularly when the actuator is used to control subsea valves used in extracting oil and gas, since a failure of the actuator can have significant environmental consequences.

Hydraulic actuators however, require a connection to a source of hydraulic fluid for operation and this typically entails connecting the actuator within a hydraulic circuit for communicating hydraulic fluid to and from the actuator. This requires several hydraulic interfaces which is clearly undesirable, particularly when the actuator is located hundreds of metres below the surface of the sea.

In accordance with the present invention, there is provided an electrically operable rotary actuator assembly for opening and closing a rotary gate valve, the assembly comprising:
an operating shaft for operating the valve,
an electrically operable actuator for imparting a rotational drive to the shaft to cause the shaft to rotate from a first rotational orientation to a second rotational orientation,
biasing means for imparting a rotational bias to the shaft to cause the shaft to rotate from the second rotational orientation to the first rotational orientation, and
a clamp arrangement for clamping the shaft in the second rotational orientation.

In an embodiment, the assembly advantageously further comprises a housing for housing the shaft, the electrically operable actuator, biasing means and clamp arrangement. The housing may comprise a sealed housing, which may be filled with a fluid, such as oil, particularly when the actuator is to be used underwater.

Preferably, the electrically operable actuator comprises an electric motor and a drive assembly for driving the shaft to rotate to operate the valve, the drive assembly comprising a drive shaft and a follower body which is arranged to rotate in accordance with the drive shaft. The operating shaft extends through the follower body, along a rotational axis of thereof, and is detachably coupled to the body for rotation therewith. In normal operation, the operating shaft is biased into a rotational engagement with the follower body, so that the shaft and body rotate together. This engagement is facilitated by diametric slot or keyway disposed at a distal end of the body, which is arranged to receive a cross-piece or key disposed upon the shaft. The key is biased to locate within the keyway via a coil spring, which biases the shaft along the rotational axis.

The biasing means preferably comprises a spring, such as a torque or clock spring, which is coupled at one end to the follower body and at the other end to an anchor point, which may be on the housing. In an embodiment, the torque spring extends through typically one and a half revolutions around the follower body and biases the shaft to the first orientation, which may correspond with an open or closed state of the valve.

The clamp arrangement is arranged to clamp the shaft to prevent any rotation thereof. In a preferred embodiment however, the clamp arrangement is electrically operable, and may comprise a solenoid and a push rod which is arranged to move within the solenoid to tension a strap around the follower body. In this respect, when the solenoid is actuated the push rod is arranged to move to apply a tension to the strap, which grips the follower body to resist the rotational torque applied thereto.

The assembly preferably further comprises control circuitry for selectively applying electrical power to the electrically operable actuator, namely the electric motor and the electrically operable clamp, namely the solenoid. In an embodiment, it is envisaged that the control circuitry may comprise a time delay for delaying the activation of the solenoid until the electric motor has caused the shaft to rotate through substantially 90°. Thereafter, the power to the motor may be discontinued. This reduces the power consumption of the actuator assembly by minimising the time for which the motor is operating.

Embodiments of the present invention will now be described by way of example only and with reference to the accompanying drawings, in which:
Figure 1 is a longitudinal sectional view through a rotary gate valve actuator assembly according to a first embodiment of the present invention;
Figure 2 is a cross-sectional view of the assembly illustrated in figure 1, taken along line A-A;
Figure 3 is a cross-sectional view of the assembly illustrated in figure 1, taken along line B-B; and,
Figure 4 is a longitudinal sectional view through a rotary gate valve actuator assembly according to a second embodiment of the present invention;

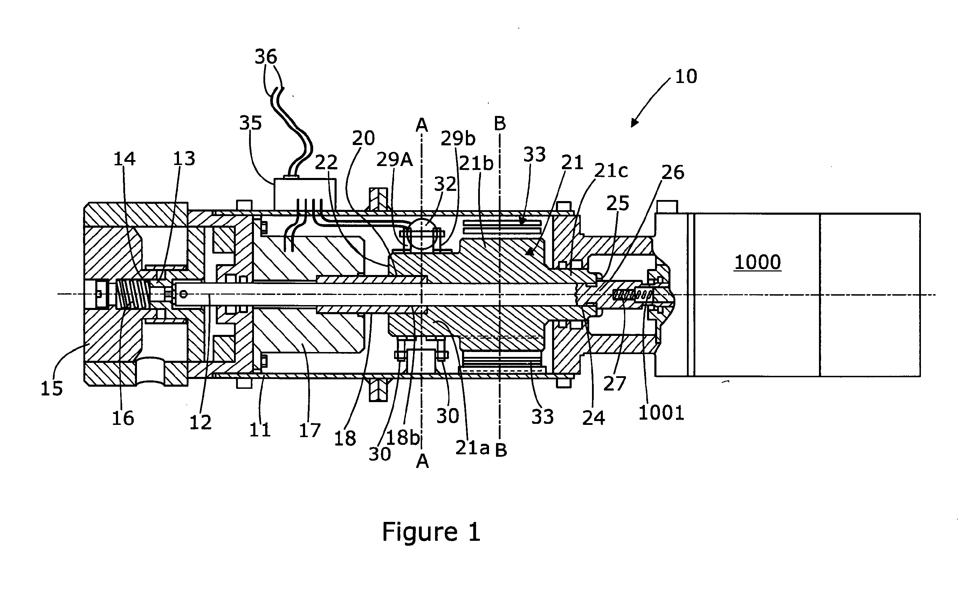

Referring to figure 1 of the drawings, there is illustrated a rotary gate valve actuator assembly 10 according to first embodiment of the present invention for opening and closing a rotary gate valve 1000. The assembly 10 comprises a housing 11, which may be cylindrical in shape and an operating shaft 12 which extends along an axis of the housing 11, and which is arranged to rotate about the axis to open and close a valve 1000 coupled at a distal end of the housing 11. The valve 1000 comprises a valve stem 1001 which is rotatable to open and close the valve 1000 and is coupled to a distal end of the operating shaft 12. The assembly 10 may be used to open and close valves 1000 located upon a seabed, in which case, the housing 11 is typically sealed and in order to balance the difference in pressure between the inside and outside of the housing 11, the housing 11 may be filled with oil (not shown) and pressure balanced to the ambient pressure.

A proximal end of the operating shaft 12 comprises a first cross-piece 13 which extends substantially transverse to the longitudinal axis of the shaft 12 (out of the page in figure 1), and which is locatable within a first diametric slot or keyway 14 disposed in a handle 15 which may be manipulated externally of the housing 11 to rotate the shaft 12. The first cross-piece 13 and keyway 14 are biased in spaced relation by a first coil spring 16, such that in normal operation, the shaft 12 rotates independently of the handle 15.

The actuator assembly 10 further comprises an electrical motor 17 disposed at a proximal end of the housing 11 and drive assembly comprising a drive shaft 18 which extends away from the motor 17, substantially along a longitudinal axis of the housing 11. The motor 17 and drive shaft 18 are arranged to rotate the operating shaft 12 from a first rotational orientation to a second rotational orientation. The drive shaft 18 comprises an external surface 18a, which may comprise a polygonally shaped cross-section, such as hexagonally shaped, or which may comprise a plurality of splines (not shown) which extend along the length of the drive shaft 18. The drive shaft 18 further comprises a longitudinal bore 19 which extends along the length thereof, within which the operating shaft 12 is permitted to rotate freely.

In a first embodiment, as illustrated in figure 1 of the drawings, the drive shaft 18 extends along the housing 11 and a portion 18b of the drive shaft 18 is located within a channel 20 formed within a follower body, or bobbin 21, which comprises a substantially closed cylindrical shape. The bobbin 21 comprises three principal sections, namely a proximal 21a, intermediate 21b and distal section 21c, each comprising a different outer radius. The channel 20 extends into the proximal section 21a, through an end wall 22 thereof, and comprises a complementary shaped profile to the outer surface 18a of the drive shaft 18, such that the drive shaft 18 and bobbin 21 become rotationally coupled when the portion 18b of the drive shaft 18 is located within the channel 20.

The bobbin 21 comprises a central bore 23 which extends along a longitudinal axis thereof, which is substantially collinear with the longitudinal axis of the housing 11, an axis of the channel 20 and a rotational axis of the operating shaft 12. The operating shaft 12 similarly extends within the bore 23 of the bobbin 21 and is free to rotate therein. The distal section 21c of the bobbin 21 comprises a second diametric slot or keyway 24 formed in and end wall 25 thereof which is arranged to receive a second cross-piece 26 which extends substantially transverse the longitudinal axis of the operating shaft 12 (out of the page of figure 1). The second cross-piece 26 is biased within the second keyway 24 by a second coil spring 27, which comprises a smaller spring constant than the first soil spring 16. The second coil spring 27 extends between the distal end of the operating shaft 12 and the valve stem 101, and is arranged to rotationally couple the operating shaft 12 to the bobbin 21.

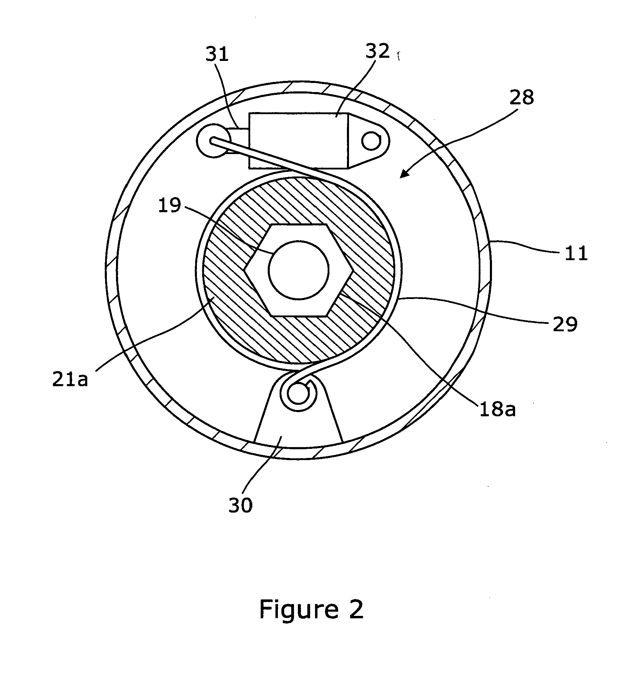

The assembly 10 further comprises a clamp arrangement 28 for clamping the rotational orientation of the operating shaft 12. Referring to figures 1 and 2 of the drawings, the clamp arrangement 28 comprises a clamping strap 29 having a first and second strap portion 29a, 29b which separately extend around an outer surface of the proximal section 21a of the bobbin 21. The strap 29 is secured at a first and second end thereof to a respective anchor point 30 which is located on an interior of the housing 11. The strap 29 is further slidably coupled at a position intermediate the first and second portions 29a, 29b, to a push rod 31 of a solenoid 32, which is mounted upon an interior of the housing 11. In the illustrated embodiment, the strap 29 is arranged to pass through an eyelet (not shown) disposed upon the push rod 31 and the push rod 31 is constrained to move into and out from the solenoid 32 in a direction which is substantially transverse a longitudinal axis of the housing 11 to selectively apply a tension to the strap 29 to clamp the bobbin 21 and also the operating shaft 12, by virtue of the rotational coupling. The skilled reader will recognise however, that alternative clamping arrangements may be used to provide the same effect.

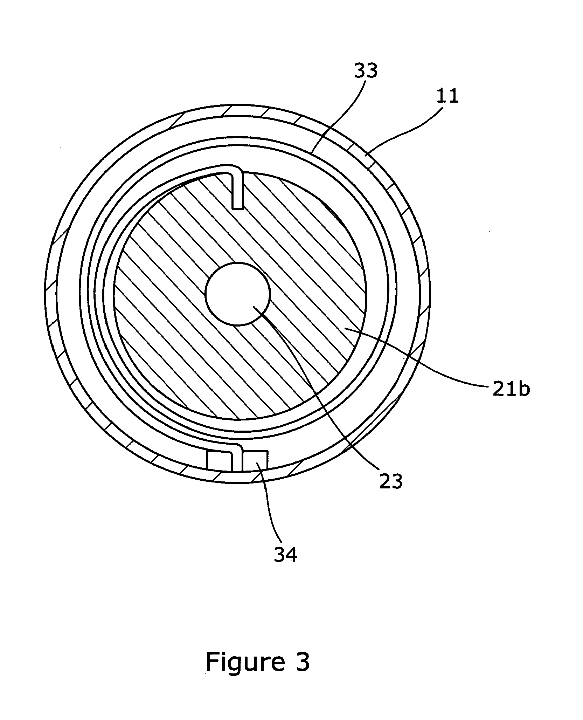

Referring to figures 1 and 3 of the drawings, the assembly 10 further comprises biasing means for biasing the bobbin 21 and thus the operating shaft 12 to the first rotational orientation. The biasing means comprises a torque or clock spring 33 which extends around an outer surface of the intermediate section 21b of the bobbin 21. The spring 33 is coupled at one end thereof to an outer surface of the bobbin 21 and at the other end to an anchor point 34 disposed on an interior of the housing 11. The clock spring 33 is arranged to develop a restoring force when the operating shaft 12 is rotated to the second orientation to cause the shaft 12 to recover the first orientation when the clamping arrangement 28 releases the bobbin 21. In this respect, the intermediate section 21b of the bobbin 21 comprises the largest radius, compared with the proximal and distal sections 21a, 21c, to provide for the greatest torque for a given clock spring 33.

The assembly 10 further comprises an electrical control circuitry (not shown) housed in a junction box 35 disposed on an exterior of the housing 11, for ease of access. The control circuitry is communicatively coupled with the electrical motor 17 and the solenoid 32, and is arranged to receive electrical power via power cables 36. In an alternative embodiment however, it is envisaged that the circuitry (not shown) may further comprise a separate battery storage (not shown) for powering the motor 17 and solenoid 32, and communication means, such as a wireless communications link (not shown) for remotely communicating with a control device (not shown) for operating the assembly 10.

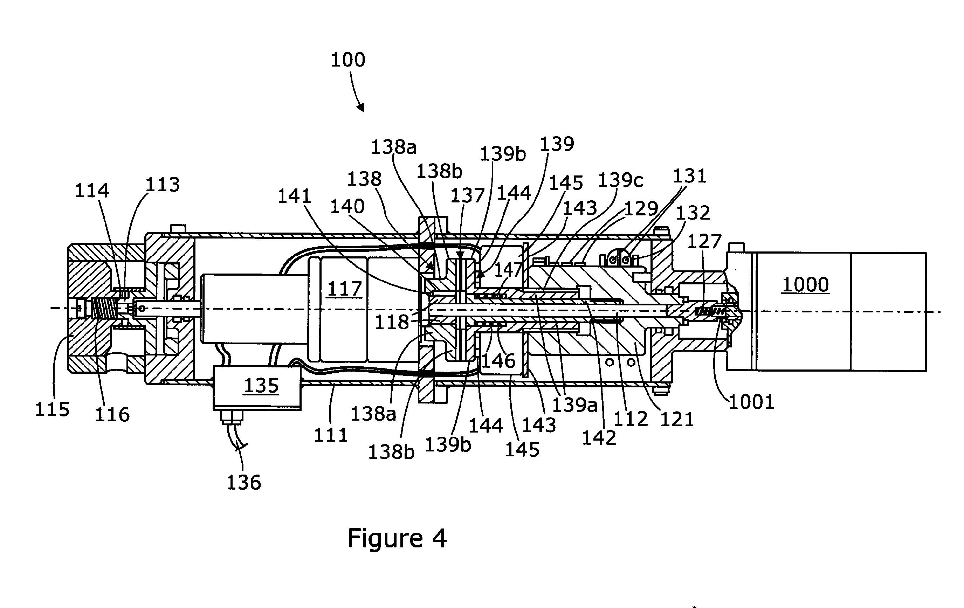

Referring to figure 4 of the drawings, there is illustrated a rotary gate valve actuator assembly 110 according to a second embodiment of the present invention. The assembly 110 of the second embodiment is substantially the same as the assembly 10 of the first embodiment, and so like features have been referenced with the same numerals but increased by 100.

The actuator assembly 110 of the second embodiment differs from the actuator assembly 10 of the first embodiment by virtue of a different drive assembly. The drive assembly of the second embodiment comprises a clutch 137 having a first and second clutch portion 138, 139. The drive shaft 118 of the assembly 110 of the second embodiment does not extend into the bobbin 121, but is instead rotationally coupled with a first clutch portion 138. The first clutch portion 138 comprises a first collar 138a which extends around the drive shaft 118 from the motor 117. An outer portion of the drive shaft 118 and an inner portion of the first collar 138a separately comprise a slot which extend substantially parallel with a longitudinal axis of the operating shaft 112, and which are alignable to form a keyway 140. The keyway 140 is arranged to receive a key 141 which rotationally couples the first clutch portion 138 to the drive shaft 118. The first clutch portion 138 further comprises a first flange 138b which extends radially outwardly from a distal end of the first collar 138a and which comprises a plurality of protuberances (not shown) formed on a side face thereof which faces away from the collar 138a. The protuberances (not shown) are angularly separated around the flange 138b and extend in a radial direction across the flange 138b.

The second clutch portion 139 similarly comprises a second collar 139a which is centred upon the longitudinal axis of the operating shaft and which extends around a sleeve 142 disposed upon the operating shaft 112 that is rotationally uncoupled with the operating shaft 112. The second collar 139a is uncoupled with the sleeve 142 and is permitted to move longitudinally of the sleeve 142.

The second clutch portion 139 further comprises a flange 139b which extends radially outwardly from a proximal end of the second collar 139a and which comprises a plurality of channels (not shown) formed therein on a side face thereof which faces away from the second collar 139a, adjacent the side face of the first flange 138b. The channels (not shown) comprise a complimentary shape to the protuberances and are similarly angularly separated around the side face of the second flange 139b, such that for a relative rotational orientation of the first and second clutch portions 138, 139, the protuberances (not shown) on the side face of the first flange 138b become aligned with the channels (not shown) on the side face of the second flange 139b.

The second collar comprise a splined external surface portion 139c which is arranged to mesh within a splined channel which extends into a proximal end of the bobbin, such that the second clutch portion is rotationally coupled to the bobbin.

The assembly 110 of the second embodiment further comprises a thrust plate 143 coupled at a proximal end of the bobbin 121, which is arranged to resist a thrust from a plurality of pusher arms 144 separately associated with a plurality of clutch solenoids 145, angularly separated around the second collar 139a. The clutch solenoids 145 are rigidly coupled to the thrust plate 143 and comprise a pusher arm 144 that is arranged to exert a longitudinal thrust of force upon a side face of the second flange 139b which is opposite the side comprising the channels, to cause the second clutch portion 139 to move relative to the sleeve 142, toward the first clutch portion 138. The location of the protuberances (not shown) on the first flange 138b within the channels (not shown) on the second flange 139b rotationally couple the drive shaft 118 with the bobbin 121 such that the motor 117 can impart a rotational drive to the operating shaft 112 and actuate the valve 1000.

The clutch solenoids 145 are arranged to receive electrical power from the junction box 135 via the power cables 136. When the electrical power to the clutch solenoids 145 is removed, the second clutch portion 139 is biased to move away from the first clutch portion 138 to uncouple the first and second flanges 138b 139b, via a compression spring 146 disposed in an annular recess 147 between the sleeve 142 and the second collar 139a.

In use, when it is desired to open the valve 1000 for example, using the actuator assembly 10 of the first embodiment, the control circuitry (not shown) is arranged to apply electrical power to the motor 17 to cause the drive shaft 18 to rotate about a longitudinal axis thereof. During this period, the solenoid 32 remains unpowered and idle, such that the straps 29 extend loosely around the proximal section 21a of the bobbin 21. As the drive shaft 18 rotates, the bobbin 21 which is coupled thereto by virtue of the intimate fit of the portion 18b of the drive shaft 18 within the channel 20, also rotates. This subsequently causes the operating shaft 12 to rotate from the first orientation to the second orientation, which may typically comprise a ¼ turn or a turn through a substantially 90° by virtue of the location of the second cross-piece 26 within the second keyway 24, and thus the rotation of the valve stem 101 to open the valve 1000. At the same time, the clock spring 33 develops a restoring force which urges the operating shaft 12 back to the first orientation.

As the operating shaft 12 reaches the second orientation, electrical power is applied to the solenoid 32 via the circuitry (not shown), which causes the push rod 31 to move outwardly thereof. This causes the strap portions 29a, 29b to tension around the proximal section 21a of the bobbin 21 to effectively lock the rotational orientation of the bobbin 21. The electrical power to the motor 17 is subsequently disconnected by the circuitry (not shown).

The electrical power required to operate the motor 17 and rotate the operating shaft 12 is significantly greater than that required to power the solenoid 32. Accordingly, the switch over from the application of electrical power from the motor 17 to the solenoid 32 is preferred, rather than continuously powering the motor 17 to hold the operating shaft 12 in the second orientation, particularly in situations in which the actuator 10 is powered from a battery source (not shown). Moreover, it is envisaged that the control circuitry (not shown) may comprise a time delay for electrically powering the solenoid 32 after a predetermined time has lapsed from the application of electrical power to the motor 17.

In a similar manner, when it is desired to open the valve 1000 for example, using the actuator assembly 110 of the second embodiment, the control circuitry (not shown) is arranged to apply electrical power to the motor 117 to cause the drive shaft 118 to rotate about a longitudinal axis thereof. During this period, the solenoid 132 remains unpowered and idle, such that the straps 129 extend loosely around the bobbin 121. As the drive shaft 118 rotates the first clutch portion 138 will also rotate owing to the rotational coupling thereto. When it is desired to open the valve 1000, the control circuitry (not shown) further applies electrical power to the clutch solenoids 145 to cause the pusher arms 144 to push against the bias of the compression spring 146 to cause the second clutch portion 139 to move toward the first clutch portion 138. During this movement, the first and second flanges 138b, 139b will eventually come into contact and as the first flange 138b is further rotated, the protuberances (not shown) will become aligned with the channels (not shown) and become located therein under the force of the pusher arms 144. The location of the protuberances within the channels thus rotationally couples the motor 117 to the bobbin 121 and thus the operating shaft 112 (as described above with reference to the first embodiment), to cause the operating shaft 112 to rotate to open the valve 1000.

Once the valve 1000 has been opened, the electrical power is applied to the solenoid 132 via the circuitry (not shown), which causes the push rod 131 to move outwardly thereof. This causes the strap portions 129a, 129b to tension around the bobbin 121 to effectively lock the rotational orientation of the bobbin 121. The electrical power to the motor 117 and clutch solenoids 145 is subsequently disconnected by the circuitry (not shown).

In the event of a power failure, or when it is desired to close the valve 1000 for example, the electrical power to the solenoid 32 is removed, which releases the tension within the straps 29 around the bobbin 21. The potential energy stored in the clock spring 33 is subsequently released, which causes the spring 33 to recover to its original configuration and thus the operating shaft 12 to rotate back to the first orientation. At the same time, and in the case of the assembly 10 of the first embodiment, the drive shaft 18 rotates to cause the motor 17 to return to the initial drive position and to cause the valve stem 1001 to rotate to close the valve 1000.

In situations where the electrical motor 17, clamping arrangement 28 and/or clock spring 33 of the assembly of the first or second embodiment prevent controlled operation of the valve 1000, the valve 1000 may be suitably closed or opened by manipulating the handle 15, 115 at the proximal end of the operating shaft 12, 112. The handle 15, 115 is first moved longitudinally of the housing 11, 111 into the housing 11, 111 against the bias of the first coil spring 16, 116. The increased strength of the first spring 16, 116 compared to the second spring 27, 127 causes the second spring 27, 127 to compress, thereby allowing the second cross-piece 26, 126 to move out from the second keyway 24, 124 to rotationally uncouple the operating shaft 12, 112 from the bobbin 21, 121. Upon further moving the handle 15, 115 inwardly of the housing 15, 115, the first cross-piece 13, 113 is arranged to locate within the first keyway 14, 114 to rotationally couple the operating shaft 12, 112 to the handle 15, 115. Once coupled, the handle 15, 115 and thus the operating shaft 12, 112 may be rotated as desired to open or close the valve 1000.

From the foregoing, it is evident that the rotary gate valve actuator assembly provides for a simple yet improved means of operating rotary gate valves.

## Claims

1. An electrically operable rotary actuator assembly for opening and closing a rotary gate valve, the assembly comprising:
an operating shaft for operating the valve,
an electrically operable actuator for imparting a rotational drive to the shaft to cause the shaft to rotate from a first rotational orientation to a second rotational orientation,
biasing means for imparting a rotational bias to the shaft to cause the shaft to rotate from the second rotational orientation to the first rotational orientation, and
a clamp arrangement for clamping the shaft in the second rotational orientation.

2. An actuator assembly according to claim 1, further comprising a housing for housing the shaft, electrically operable actuator, biasing means and clamp arrangement.

3. An actuator assembly according to claim 1 or 2, wherein the electrically operable actuator comprises an electric motor and a drive assembly for driving the operating shaft to rotate to operate the valve.

4. An actuator assembly according to claim 3, wherein the drive assembly comprises a drive shaft and a follower body which is arranged to rotate in accordance with the drive shaft.

5. An actuator assembly according to claim 4, wherein the operating shaft extends through the follower body, along a rotational axis of thereof, and is detachably coupled to the body for rotation therewith.

6. An actuator assembly according to claim 3 or 4, wherein the biasing means comprises a spring which is coupled at one end to the follower body and at the other end to an anchor point.

7. An actuator assembly according to claim 6, wherein the spring comprises a clock spring.

8. An actuator assembly according to any preceding claim, wherein the clamp arrangement is arranged to clamp the shaft to prevent any rotation thereof.

9. An actuator assembly according to any preceding claim, wherein the clamp arrangement comprises an electrically operable clamp.

10. An assembly according to claim 8 or 9 as appended to claim 4, wherein the clamp arrangement comprises a solenoid and a push rod which is arranged to move within the solenoid to tension a strap around the follower body.

11. An assembly according to claim 9, further comprising control circuitry for selectively applying electrical power to the electrically operable actuator and the electrically operable clamp.
